# EUROPEAN PATENT APPLICATION

(11) **EP 4 739 009 A1**
(43) Date of publication of application: **06.05.2026**
(21) Application number: 24849347.0
(22) Date of filing: 05.06.2024
(51) Int. Cl.: H05K 5/03, H04M 1/02, C03C 17/34, C08J 7/06

(54) **COVER PLATE INCLUDING PLURALITY OF LAYERS AND ELECTRONIC DEVICE INCLUDING SAME**

(30) Priority: 01.08.2023 KR 20230100648; 24.08.2023 KR 20230111604
(71) Applicant: Samsung Electronics Co., Ltd., Suwon-si, Gyeonggi-do 16677 (KR)
(72) Inventor: LIM, Jiwoon, Suwon-si, Gyeonggi-do 16677 (KR); CHOI, Jongmun, Suwon-si, Gyeonggi-do 16677 (KR); CHOI, Hyunsuk, Suwon-si, Gyeonggi-do 16677 (KR); LEE, Hosoon, Suwon-si, Gyeonggi-do 16677 (KR)
(74) Representative: Gulde & Partner
(86) International application number: PCT/KR2024/007738
(87) International publication number: WO 2025/028776

(57) **Abstract**

An exemplary cover plate includes: a base plate: a first layer which is disposed on the base plate and includes at least one refractive layer for refracting light; a second layer disposed on the first layer and including silicon; a third layer which is disposed on the second layer and has a reflectivity equal to or less than a threshold value with respect to a laser having a designated wavelength range; and a plurality of patterns formed on at least one of the base plate, the first layer, the second layer, and the third layer. The absorption rate of the second layer with respect to the laser is higher than the absorption rate of the base plate with respect to the laser. Various other embodiments may be possible.

## Description

### [Technical Field]

The present disclosure relates to a cover plate including a plurality of layers and an electronic device including the same.

### [Background Art]

An electronic device may include a cover plate forming at least a part of an exterior of the electronic device. The cover plate may include glass (e.g., tempered glass). Since the cover plate is visible from the outside, it may include a plurality of patterns used as a design element of the electronic device. The plurality of patterns may implement color, material, and finishing (CMF) of the electronic device. The plurality of patterns may be formed through a laser ablation process of irradiating a laser to a surface of the cover plate.

The above-described information may be provided as a related art for a purpose of helping understanding of the present disclosure. No claim or determination is raised as to whether any of the above-described descriptions may be applied as a prior art related to the present disclosure.

### [Disclosure]

### [Technical Solution]

A cover plate is provided. The cover plate may include a base plate. The cover plate may include a first layer disposed on the base plate and including at least one refractive layer for refracting light. The cover plate may include a second layer disposed on the first layer and including silicon. The cover plate may include a third layer, disposed on the second layer, having a reflexibility equal to or less than a threshold value for a laser with a specified wavelength range, and configured to transmit the laser. The cover plate may include a plurality of patterns formed on at least one of the base plate, the first layer, the second layer, or the third layer. An absorption rate of the second layer for the laser may be higher than an absorption rate of the base plate for the laser.

An electronic device is provided. The electronic device may include a cover plate forming at least a part of an exterior of the electronic device. The cover plate may include a base plate. The cover plate may include a first layer disposed on the base plate and including at least one refractive layer for refracting light. The cover plate may include a second layer disposed on the first layer and including silicon. The cover plate may include a third layer disposed on the second layer, having a reflexibility equal to or less than a threshold value for a laser with a specified wavelength range, and configured to transmit the laser. The cover plate may include a plurality of patterns formed on at least one of the base plate, the first layer, the second layer, or the third layer. An absorption rate of the second layer for the laser may be higher than an absorption rate of the base plate for the laser.

### [Description of the Drawings]

FIG. 1 is a block diagram of an electronic device in a network environment according to an embodiment.
FIG. 2 illustrates an exemplary electronic device.
FIG. 3 is an exploded perspective view of an exemplary electronic device.
FIG. 4 is a cross-sectional view of a portion of an exemplary cover plate.
FIG. 5A schematically illustrates a process of irradiating a laser to an exemplary cover plate.
FIG. 5B is an enlarged view of enlarging a heat affected zone.
FIG. 6 is an enlarged view of enlarging a heat affected zone and a pattern of an exemplary cover plate.
FIGS. 7A, 7B, and 7C are cross-sectional views of a portion of an exemplary cover plate including a pattern.
FIGS. 7D and 7E are cross-sectional views of a portion of an exemplary cover plate including a protective layer.
FIG. 8A is a graph indicating an absorption rate of a cover plate according to a wavelength of a laser.
FIG. 8B illustrates a pattern formed on a cover plate according to a comparative example according to an energy intensity of a laser.
FIG. 8C illustrates a pattern formed on a cover plate according to an embodiment according to an energy intensity of a laser.

### [Mode for Invention]

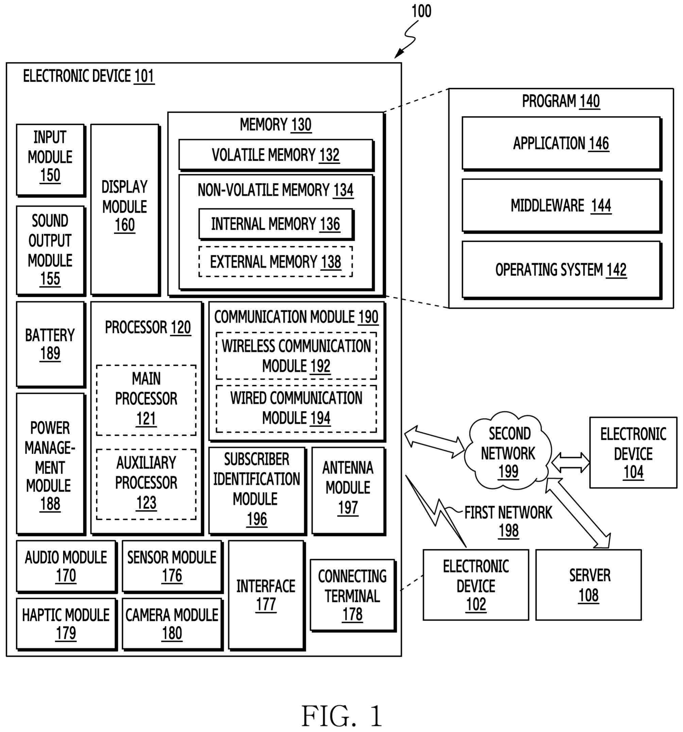

FIG. 1 is a block diagram illustrating an electronic device 101 in a network environment 100 according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

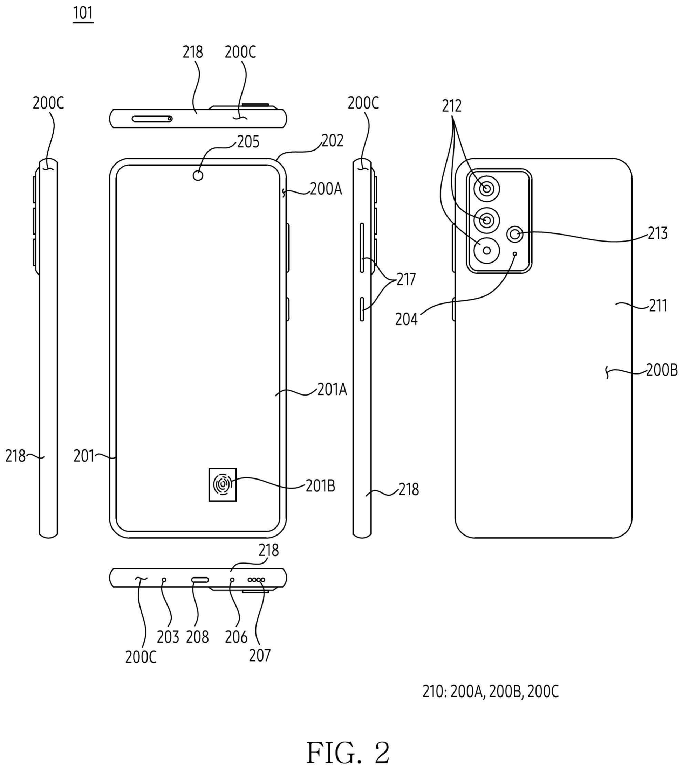

FIG. 2 illustrates an exemplary electronic device.

Referring to FIG. 2, an electronic device 101 according to an embodiment may include a housing 210 forming an exterior of the electronic device 101. For example, the housing 210 may include a first surface (or a front surface) 200A, a second surface (or a rear surface) 200B, and a third surface (or a side surface) 200C surrounding a space between the first surface 200A and the second surface 200B.

The electronic device 101 according to an embodiment may include a substantially transparent first plate 202. According to an embodiment, the first plate 202 may form at least a part of the first surface 200A. According to an embodiment, the first plate 202 may include, for example, a glass plate including various coating layers, or a polymer plate, but is not limited thereto.

The electronic device 101 according to an embodiment may include a substantially opaque second plate 211. According to an embodiment, the second plate 211 may form at least a part of the second surface 200B. According to an embodiment, the second plate 211 may be formed by coated or colored glass, ceramic, polymer, metal (e.g., aluminum, stainless steel (STS), or magnesium), or a combination of at least two of the materials.

The electronic device 101 according to an embodiment may include a frame 218. According to an embodiment, the frame 218 may form at least a part of the third surface 200C of the electronic device 101 by being coupled with the first plate 202 and/or the second plate 211. For example, the frame 218 may also entirely form the third surface 200C of the electronic device 101. For example, the frame 218 may also form the third surface 200C of the electronic device 101 together with the first plate 202 and/or the second plate 211.

The electronic device 101 according to an embodiment may include at least one of a display 201, audio modules 203, 204, and 207, a sensor module (not illustrated), camera modules 205, 212, and 213, a key input device 217, a light-emitting element (not illustrated), and/or a connector hole 208. According to an embodiment, the electronic device 101 may omit at least one of the components (e.g., the key input device 217 or the light-emitting element (not illustrated)), or may additionally include another component.

According to an embodiment, at least a part of the display 201 (e.g., the display module 160 of FIG. 1) may be visible through the first plate 202 forming the first surface 200A. According to an embodiment, the display 201 may be disposed on a back surface of the first plate 202.

According to an embodiment, a shape of an outer periphery of the display 201 may be formed substantially the same as a shape of an outer periphery of the first plate 202 adjacent to the display 201. According to an embodiment, in order to expand an extent in which the display 201 is visually exposed, a gap between the outer periphery of the display 201 and the outer periphery of the first plate 202 may be formed substantially the same.

According to an embodiment, the display 201 (or the first surface 200A of the electronic device 101) may include a screen display region 201A. According to an embodiment, the display 201 may provide a user with visual information through the screen display region 201A. In an illustrated embodiment, when the first surface 200A is viewed from the front, the screen display region 201A is illustrated as being spaced apart from an outer periphery of the first surface 200A and being positioned inside the first surface 200A, but it is not limited thereto. According to an embodiment, when the first surface 200A is viewed from the front, at least a part of a periphery of the screen display region 201A may also be substantially coincided with a periphery of the first surface 200A (or the first plate 202).

According to an embodiment, the screen display region 201A may include a sensing region 201B configured to obtain biometric information of the user. Herein, a meaning of "the screen display region 201A includes the sensing region 201B" may be understood as that at least a part of the sensing region 201B may be overlapped with the screen display region 201A. For example, the sensing region 201B may mean a region that may display visual information by the display 201 similar to another region of the screen display region 201A, and that may additionally obtain the biometric information (e.g., a fingerprint) of the user. According to an embodiment, the sensing region 201B may also be formed in the key input device 217.

According to an embodiment, the display 201 may include a region in which a first camera module 205 (e.g., the camera module 180 of FIG. 1) is positioned. According to an embodiment, an opening may be formed in the region of the display 201, and the first camera module 205 (e.g., a punch hole camera) may be at least partially disposed in the opening so as to face the first surface 200A. In this case, the screen display region 201A may surround at least a part of a periphery of the opening. According to an embodiment, the first camera module 205 (e.g., an under display camera (UDC)) may be disposed under the display 201 to overlap the region of the display 201. In this case, the display 201 may provide the user with visual information through the region, and additionally, the first camera module 205 may obtain an image corresponding to a direction toward the first surface 200A through the region of the display 201.

According to an embodiment, the display 201 may be coupled with or disposed adjacent to touch sensing circuitry, a pressure sensor capable of measuring an intensity (pressure) of a touch, and/or a digitizer that detects a magnetic field type stylus pen.

According to an embodiment, the audio modules 203, 204, and 207 (e.g., the audio module 170 of FIG. 1) may include the microphone holes 203 and 204 and/or the speaker hole 207.

According to an embodiment, the microphone holes 203 and 204 may include the first microphone hole 203 formed in a partial region of the third surface 200C and/or the second microphone hole 204 formed in a partial region of the second surface 200B. A microphone (not illustrated) for obtaining an external sound may be disposed inside the microphone holes 203 and 204. The microphone may include a plurality of microphones to be able to sense a direction of sound.

According to an embodiment, the second microphone hole 204 formed in the partial region of the second surface 200B may be disposed adjacent to the camera modules 205, 212, and 213. For example, the second microphone hole 204 may obtain sound according to an operation of the camera modules 205, 212, and 213. However, it is not limited thereto.

According to an embodiment, the speaker hole 207 may include an external speaker hole 207 and a call receiver hole (not illustrated). The external speaker hole 207 may be formed in a portion of the third surface 200C of the electronic device 101. According to an embodiment, the external speaker hole 207 may be implemented as one hole with the microphone hole 203. Although not illustrated, the call receiver hole (not illustrated) may be formed on another portion of the third surface 200C. For example, the call receiver hole may be formed on an opposite side of the external speaker hole 207 on the third surface 200C. For example, based on the illustration of FIG. 2, the external speaker hole 207 may be formed on the third surface 200C corresponding to a lower end of the electronic device 101, and the call receiver hole may be formed on the third surface 200C corresponding to an upper end of the electronic device 101. However, it is not limited thereto, and according to an embodiment, the call receiver hole may also be formed at a position other than the third surface 200C. For example, the call receiver hole may also be formed by a space separated between the first plate 202 (or the display 201) and the frame 218.

According to an embodiment, the electronic device 101 may include at least one speaker (not illustrated) configured to output sound to the outside of the housing 210 through the external speaker hole 207 and/or the call receiver hole (not illustrated).

According to an embodiment, the sensor module (not illustrated) (e.g., the sensor module 176 of FIG. 1) may generate an electrical signal or a data value corresponding to an operating state inside the electronic device 101 or an external environmental state. For example, the sensor module may include at least one of a proximity sensor, an HRM sensor, a fingerprint sensor, a gesture sensor, a gyro sensor, a barometric sensor, a magnetic sensor, an acceleration sensor, a grip sensor, a color sensor, an infrared (IR) sensor, a biometric sensor, a temperature sensor, a humidity sensor, or an illuminance sensor.

According to an embodiment, the camera modules 205, 212, and 213 (e.g., the camera module 180 of FIG. 1) may include the first camera module 205 disposed to face the first surface 200A of the electronic device 101, the second camera module 212 disposed to face the second surface 200B, and the flash 213.

According to an embodiment, the second camera module 212 may include a plurality of cameras (e.g., a dual camera, a triple camera, or a quad camera). However, the second camera module 212 is not necessarily limited to including the plurality of cameras, and may also include one camera.

According to an embodiment, the first camera module 205 and the second camera module 212 may include one or a plurality of lenses, an image sensor, and/or an image signal processor.

According to an embodiment, the flash 213 may include, for example, a light-emitting diode or a xenon lamp. According to an embodiment, two or more lenses (an infrared camera and a wide-angle and telephoto lens) and image sensors may be disposed on one surface of the electronic device 101.

According to an embodiment, the key input device 217 (e.g., the input module 150 of FIG. 1) may be disposed on the third surface 200C of the electronic device 101. According to an embodiment, the electronic device 101 may not include a portion or all of the key input device 217, and the key input device 217 that is not included may be implemented in another form, such as a soft key, on the display 201.

According to an embodiment, the connector hole 208 may be formed on the third surface 200C of the electronic device 101 such that a connector of an external device may be accommodated. A connecting terminal (e.g., the connecting terminal 178 of FIG. 1) electrically connected to the connector of the external device may be disposed in the connector hole 208. The electronic device 101 according to an embodiment may include an interface module (e.g., the interface 177 of FIG. 1) for processing an electrical signal transmitted and received through the connecting terminal.

According to an embodiment, the frame 218 may include a vent hole 206. For example, air outside the housing 210 may be introduced into the housing 210 through the vent hole 206. For example, air inside the housing 210 may be discharged outside the housing 210 through the vent hole 206. A position of the vent hole 206 is not limited to a position illustrated in FIG. 2.

According to an embodiment, the electronic device 101 may include the light-emitting element (not illustrated). For example, the light-emitting element (not illustrated) may be disposed on the first surface 200A of the housing 210. The light-emitting element (not illustrated) may provide state information of the electronic device 101 in a form of light. According to an embodiment, the light-emitting element (not illustrated) may provide a light source linked with an operation of the first camera module 205. For example, the light-emitting element (not illustrated) may include an LED, an IR LED, and/or a xenon lamp.

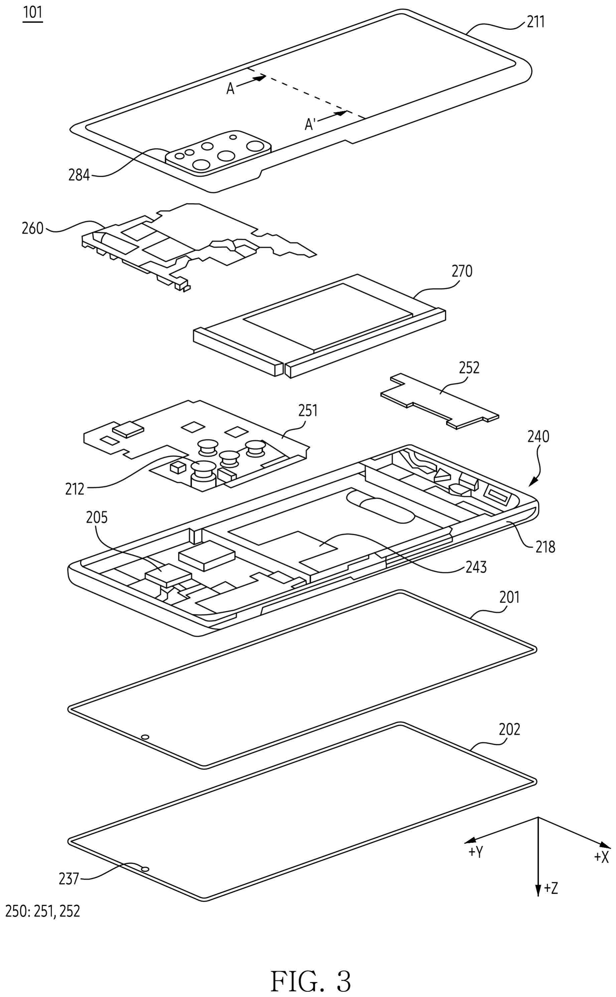

FIG. 3 is an exploded perspective view of an exemplary electronic device.

Hereinafter, an overlapping description of a configuration having the same reference numerals as the above-described configuration will be omitted.

Referring to FIG. 3, an electronic device 101 according to an embodiment may include a frame 218, a support member 243, a first printed circuit board 251, a second printed circuit board 252, a cover plate 260, and/or a battery 270.

The electronic device 101 according to an embodiment may include the frame 218 forming an exterior (e.g., the third surface 200C of FIG. 2) of the electronic device 101 and the support member 243 extending inward from the frame 218. According to an embodiment, the frame 218 and the support member 243 may be disposed between a display 201 and a second plate 211. For example, the frame 218 may surround a space between the second plate 211 and a first plate 202 (and/or the display 201). For example, the support member 243 may extend from the frame 218 in the space.

According to an embodiment, the support member 243 may support or accommodate other components included in the electronic device 101. For example, the display 201 may be disposed on a surface of the support member 243 facing a direction (e.g., a +z direction), and the display 201 may be supported by the support member 243. For example, the first printed circuit board 251, the second printed circuit board 252, the battery 270, and a second camera module 212 may be disposed on another surface of the support member 243 toward an opposite direction (e.g., a -z direction) to the direction. For example, the first printed circuit board 251, the second printed circuit board 252, the battery 270, and the second camera module 212 may be seated in a recess defined by the frame 218 and/or the support member 243, respectively.

According to an embodiment, the first printed circuit board 251, the second printed circuit board 252, and the battery 270 may be coupled with the support member 243, respectively. For example, the first printed circuit board 251 and the second printed circuit board 252 may be fixedly disposed on the support member 243 through a coupling member such as a screw. For example, the battery 270 may be fixedly disposed on the support member 243 through an adhesive member (e.g., a double-sided tape). However, it is not limited by the above-described example.

According to an embodiment, the cover plate 260 may be disposed between the first printed circuit board 251 and the second plate 211. In an embodiment, the cover plate 260 may be disposed on the first printed circuit board 251. For example, the cover plate 260 may be disposed on a surface of the first printed circuit board 251 toward the -z direction.

According to an embodiment, the cover plate 260 may at least partially overlap the first printed circuit board 251 with respect to a z-axis. According to an embodiment, the cover plate 260 may cover at least a partial region of the first printed circuit board 251. Through this, the cover plate 260 may protect the first printed circuit board 251 from a physical impact or prevent detachment of a connector coupled to the first printed circuit board 251.

According to an embodiment, the cover plate 260 may be fixedly disposed on the first printed circuit board 251 through a coupling member (e.g., a screw), or may be coupled to the support member 243 together with the first printed circuit board 251 through the coupling member.

According to an embodiment, the display 201 may be disposed between the support member 243 and the first plate 202. For example, the first plate 202 may be disposed in a side (e.g., in the +z direction) of the display 201, and the support member 243 may be disposed in another side (e.g., in the -z direction).

According to an embodiment, the first plate 202 may be coupled with the display 201. For example, the first plate 202 and the display 201 may be attached to each other through an optical adhesive member (e.g., an optically clear adhesive (OCA) or an optically clear resin (OCR)) interposed therebetween.

According to an embodiment, the first plate 202 may be coupled with the frame 218. For example, the first plate 202 may include an outer portion extending outside the display 201 when viewed in a z-axis direction, and may be attached with the frame 218 through an adhesive member (e.g., a waterproof tape) disposed between the outer portion of the first plate 202 and the frame 218. However, it is not limited by the above-described example.

According to an embodiment, a processor (e.g., the processor 120 of FIG. 1), memory (e.g., the memory 130 of FIG. 1), and/or an interface (e.g., the interface 177 of FIG. 1) may be disposed on the first printed circuit board 251 and/or the second printed circuit board 252. The processor may include, for example, one or more of a central processing unit, an application processor, a graphic processing unit, an image signal processor, a sensor hub processor, or a communication processor. The memory may include, for example, a volatile memory or a non-volatile memory. The interface may include, for example, a high definition multimedia interface (HDMI), a universal serial bus (USB) interface, an SD card interface, and/or an audio interface. The interface may electrically or physically connect the electronic device 101 to an external electronic device, and may include a USB connector, an SD card/MMC connector, or an audio connector. According to an embodiment, the first printed circuit board 251 and the second printed circuit board 252 may be operatively or electrically connected to each other through a connecting member (e.g., a flexible printed circuit board).

According to an embodiment, the battery 270 (e.g., the battery 189 of FIG. 1) may supply power to at least one component of the electronic device 101. For example, the battery 270 may include a rechargeable secondary battery or a fuel cell. At least a part of the battery 270 may be disposed on substantially the same plane as the first printed circuit board 251 and/or the second printed circuit board 252.

The electronic device 101 according to an embodiment may include an antenna module (not illustrated) (e.g., the antenna module 197 of FIG. 1). According to an embodiment, the antenna module may be disposed between the second plate 211 and the battery 270. The antenna module may include, for example, a near field communication (NFC) antenna, a wireless charging antenna, and/or a magnetic secure transmission (MST) antenna. The antenna module may, for example, perform short-range communication with an external device or wirelessly transmit and receive power with an external device.

According to an embodiment, a first camera module 205 (e.g., a front camera) may be disposed in at least a part of the support member 243 such that a lens may receive external light through a partial region (e.g., a camera region 237) of the first plate 202 (e.g., the front surface 200A of FIG. 2).

According to an embodiment, the second camera module 212 (e.g., a rear camera) may be disposed between the support member 243 and the second plate 211. According to an embodiment, the second camera module 212 may be electrically connected to the first printed circuit board 251 through a connecting member (e.g., a connector). According to an embodiment, the second camera module 212 may be disposed such that a lens may receive external light through a camera region 284 of the second plate 211 of the electronic device 101.

According to an embodiment, the camera region 284 may be formed on a surface (e.g., the rear surface 200B of FIG. 2) of the second plate 211. According to an embodiment, the camera region 284 may be formed to be at least partially transparent such that external light may be incident on the lens of the second camera module 212. According to an embodiment, at least a part of the camera region 284 may protrude from the surface of the second plate 211 to a predetermined height. However, it is not limited thereto, and according to an embodiment, the camera region 284 may also form substantially the same plane as the surface of the second plate 211.

According to an embodiment, a housing 210 of the electronic device 101 may mean a configuration or a structure forming at least a part of the exterior of the electronic device 101. In this respect, at least a part of the first plate 202, the frame 218, and/or the second plate 211 forming the exterior of the electronic device 101 may be referred to as the housing 210 of the electronic device 101.

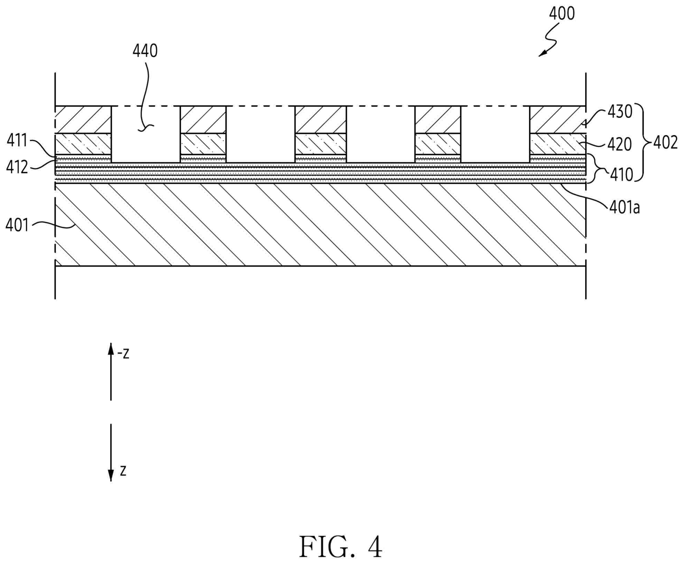

FIG. 4 is a cross-sectional view of a portion of an exemplary cover plate.

For example, a cross-sectional view of a cover plate 400 illustrated in FIG. 4 may be a cross-sectional view in which the second plate illustrated in FIG. 3 is cut along line A-A'. For example, the cover plate 400 may be referred to as the second plate 211 illustrated in FIGS. 2 and 3.

For example, the cover plate 400 may form at least a part of a rear surface (e.g., the rear surface 200B of FIG. 2) of an electronic device (e.g., the electronic device 101 of FIG. 2). Since the cover plate 400 is visible from the outside, it may include a plurality of patterns 440 to reinforce a design of the electronic device 101 and provide an aesthetic feeling. The plurality of patterns 440 may be formed through a laser ablation process of irradiating a laser to a surface of the cover plate 400.

For example, the cover plate 400 may have a relatively low absorption rate with respect to the laser. For example, in a case that the cover plate 400 includes tempered glass, it may be difficult to form the plurality of patterns 440 on the cover plate 400 using a laser due to a low absorption rate and a high transmittance rate of the tempered glass with respect to the laser. Table 1 below indicates an absorption rate and a transmittance rate of the cover plate 400 including the tempered glass for a laser wavelength.

**[Table 1]**

| Wavelength (nm) | Absorption rate (%) | Transmittance rate (%) |
|---|---|---|
| 1064 | 0.73 | 91.43 |
| 532 | 0.06 | 91.65 |
| 355 | 3.12 | 88.39 |

Referring to the Table 1, the cover plate 400 including the tempered glass may have the low absorption rate and the high transmittance rate with respect to the laser. As the laser is not absorbed by the cover plate 400 and is mostly transmitted as it is, it may be difficult to process the plurality of patterns 440 on the cover plate 400. A picosecond laser and/or a femtosecond laser having high energy may be used to form the plurality of patterns 440 on the cover plate 400. A manufacturing facility equipped with a picosecond laser device and/or a femtosecond laser device may be difficult to commercialize since they are complex and expensive.

The cover plate 400 according to an embodiment may include a coating layer 402 having a relatively high absorption rate so as to form the plurality of patterns 440 using a nanosecond laser with relatively low energy. Hereinafter, one or more components to be described with reference to drawings may be implemented together with the components of the electronic device 101 described with reference to FIGS. 2 and 3. The same reference numerals are assigned to the same components as the above-described components, and overlapping descriptions may be omitted.

In the present disclosure, a relative term such as "above" and "under" may be used to describe a relative position between components. For example, in a case that the electronic device 101 illustrated in the drawing is flipped, the "above" and the "under" may be switched.

In the present disclosure, in order to determine whether a specific condition is satisfied or fulfilled, representation of "equal to or greater than" or "equal to or less than" may be used, but it is merely a description for representing an example and does not exclude a description of "greater than" or "less than". A condition described as the "equal to or greater than" may be replaced with the "greater than", a condition described as the "equal to or less than" may be replaced with the "less than", and a condition described as the "equal to or greater than and equal to or less than" may be replaced with "greater than and less than".

For example, the electronic device 101 may include the cover plate 400. The cover plate 400 may form at least a part of an exterior of the electronic device 101. For example, the cover plate 400 may form at least a part of the rear surface of the electronic device 101. The cover plate 400 may protect electronic components disposed inside the electronic device 101 by forming the at least a part of the rear surface of the electronic device 101. For example, the cover plate 400 may include the plurality of patterns 440 that are visible from the outside.

For example, the plurality of patterns 440 may be formed through the laser ablation process performed by irradiating the laser on the surface of the cover plate 400. When a laser is irradiated to the surface of the cover plate 400, as a portion of the cover plate 400 is removed by energy of the laser, the plurality of patterns 440 may be formed. The plurality of patterns 440 formed on the cover plate 400 may be used as a design element of the electronic device 101. For example, the plurality of patterns 440 formed on the surface of the cover plate 400 may form an atmosphere and an image of the electronic device 101. The plurality of patterns 440 may implement color, material, and finishing (CMF) of the electronic device 101.

Referring to FIG. 4, the exemplary cover plate 400 may include a plurality of layers. For example, the cover plate 400 may include a base plate 401 and coating layers 402 laminated on a surface 401a of the base plate 401.

For example, the base plate 401 may be referred to as a basic substrate of the cover plate 400. For example, the base plate 401 may include glass. The glass may implement a color sense of an exterior. For example, for rigidity of the base plate 401, the glass included in the base plate 401 may be tempered glass with improved durability. However, it is not limited thereto. For example, the base plate 401 may also include polymer (e.g., plastic, an insulating film, and/or resin) that is less expensive and lighter than glass. For example, the base plate 401 may include a substantially transparent material.

For example, the coating layer 402 may include a first layer 410, a second layer 420, and a third layer 430. For example, the first layer 410, the second layer 420, and the third layer 430 may be sequentially laminated on the surface 401a of the base plate 401. For example, the base plate 401, the first layer 410, the second layer 420, and the third layer 430 may be sequentially laminated along a direction (e.g., a -z direction) of a rear surface.

For example, the first layer 410 may be disposed on the base plate 401. The first layer 410 may include at least one refractive layer 411 and/or 412 for refracting light incident from the outside of the cover plate 400. The first layer 410 may implement various colors visible by the user by refracting light. Since the first layer 410 may refract light, it may be referred to as a refractive layer and/or a color layer.

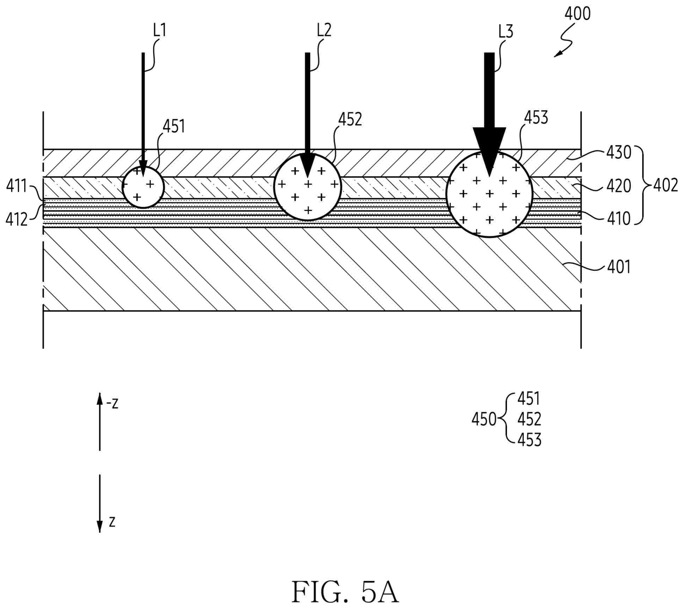

For example, the second layer 420 may be disposed on the first layer 410. For example, by absorbing the energy of the laser irradiated to form the plurality of patterns 440, the second layer 420 may form a heat affected zone (e.g., a heat affected zone 450 of FIG. 5A) to form the plurality of patterns 440. The second layer 420 may include a material having a high absorption coefficient in order to absorb the energy of the laser. For example, the second layer 420 may include silicon (Si). For example, even though a laser with relatively low energy is irradiated, the second layer 420 including silicon may form the heat affected zone 450 for forming the plurality of patterns 440 by absorbing the energy of the laser. The second layer 420 may form the heat affected zone 450 formed on at least one of the first layer 410, the second layer 420, the third layer 430, and/or the base plate 401 by absorbing the energy of the laser. Since the second layer 420 may absorb the energy of the laser, it may be referred to as an absorption layer and/or an energy absorption layer.

For example, the third layer 430 may be disposed on the second layer 420. For example, the third layer 430 may form an outermost layer of the cover plate 400. For example, the third layer 430 forming the outermost layer may have a relatively low reflexibility for the laser. For example, when the laser is irradiated to form the plurality of patterns 440, the laser may be transmitted through the third layer 430 and be transferred to the second layer 420, the first layer 410, and/or the base plate 401. In a case that the reflexibility of the third layer 430 is relatively high, as the irradiated laser is reflected, it may be difficult to process the plurality of patterns 440. Since the third layer 430 has a relatively low reflexibility, it may be referred to as a low reflection layer, an incident layer, and/or a high transmittance layer.

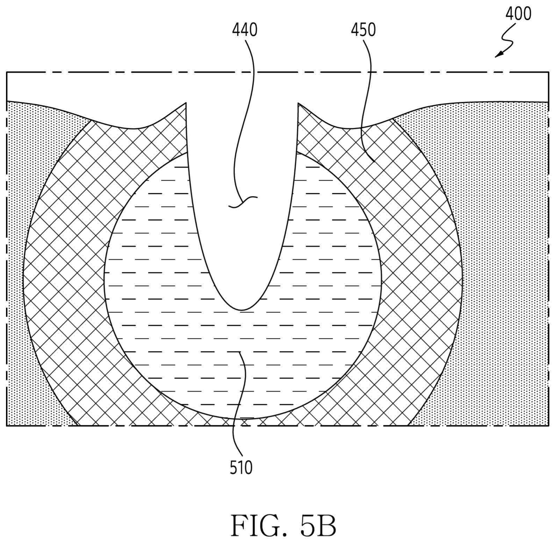

For example, the cover plate 400 may enable processing of the plurality of patterns 440 by the laser (e.g., the nanosecond laser) with relatively low energy. Referring to FIGS. 5A and 5B, a process of forming the plurality of patterns 440 by the laser with relatively low energy will be described.

FIG. 5A schematically illustrates a process of irradiating a laser to an exemplary cover plate. FIG. 5B is an enlarged view of enlarging a heat affected zone.

Referring to FIG. 5A, in order to form a plurality of patterns 440 on a cover plate 400, a laser may be irradiated to a surface of the cover plate 400.

For example, a third layer 430 forming an outermost layer may protect a second layer 420 disposed below the third layer 430 (e.g., in a +z direction). Since the third layer 430 forms the outermost layer, a user may be visible a color implemented on the third layer 430 when the user views the cover plate 400. The third layer 430 may implement a color visible by the user.

For example, the third layer 430 may have a reflexibility equal to or less than a threshold value for a laser with a specified wavelength range. For example, the specified wavelength range may be from approximately 300 nm to approximately 1,100 nm. For example, the threshold value may be approximately 50%. When the laser with the wavelength of approximately 300 nm to approximately 110 nm is irradiated to the third layer 430, approximately 50% or less of the laser may be reflected, and approximately 50% or more of the laser may be transmitted through the third layer 430. For example, the third layer 430 may transmit approximately 50% or more of the laser.

For example, in a case that the laser with the wavelength of approximately 300 nm to approximately 1,100 nm is irradiated to a base plate 401 including tempered glass, the laser may be mostly transmitted through the base plate 401 without being absorbed by the base plate 401 due to a low absorption rate and a high transmittance rate of the base plate 401 for the laser. For example, in a case that the third layer 430 has a reflexibility equal to or greater than approximately 50% for the laser with the wavelength of approximately 300 nm to approximately 1,100 nm, as most of the laser is reflected at an interface of the third layer 430, less laser may reach the second layer 420. For example, as the third layer 430 has a reflexibility equal to or less than 50% for the laser with the wavelength of approximately 300 nm to approximately 1,100 nm, the laser transmitted through a third laser L3 and reaching the second layer 420 may have enough energy to form the plurality of patterns 440.

For example, the third layer 430 may have a reflexibility of approximately 50% or less for infrared radiation (IR) with a wavelength of approximately 1000 nm to approximately 1,100 nm, green visible light with a wavelength of approximately 500 nm to approximately 590 nm, and/or ultra violet (UV) with a wavelength of approximately 300 nm to 370 nm. The above-described wavelength range is merely an example, and is not limited thereto.

For example, the second layer 420 may be disposed below the third layer 430 (e.g., in the +z direction). The laser irradiated to the third layer 430 may be transmitted through the third layer 430 and reach the second layer 420. For example, the second layer 420 may induce ablation by forming a heat affected zone 450. For example, the second layer 420 may include the heat affected zone 450 formed based on the laser transmitted through the third layer 430.

The heat affected zone 450 may be referred to as a region deformed by the energy of the laser provided to the second layer 420. For example, the second layer 420 may absorb at least a part of the energy of the laser transmitted through the third layer 430. By the energy (e.g., thermal energy) of the laser absorbed in the second layer 420, the heat affected zone 450 may be formed on at least one of a first layer 410, the second layer 420, the third layer 430, and/or the base plate 401.

Referring to FIG. 5B, in a case that a nanosecond laser is irradiated, a crystal structure in a region irradiated with the laser may be deformed by energy of the laser. In a portion irradiated with the laser, a melted portion 510 may be formed by the energy of the laser. A partial region in the melted portion 510 may be removed by the energy of the laser. The heat affected zone 450 around the melted portion 510 may not be melted, and the crystal structure may be deformed by the energy of the laser. As the melted portion solidifies, the removed partial region in the melted portion 510 may form the plurality of patterns 440. The heat affected zone 450 may cover around the plurality of patterns 440.

For example, in a case that a femtosecond laser is irradiated to a surface, the plurality of patterns 440 may be formed as a region irradiated with the femtosecond laser is deformed into a plasma state. When the femtosecond laser is irradiated, the heat affected zone 450 may not be formed since the melted portion 510 is not formed.

Referring back to FIG. 5A, when the laser with the specified wavelength range is irradiated to the cover plate 400, the second layer 420 may form the heat affected zone 450 by absorbing the energy of the laser. For example, the heat affected zone 450 may be formed at a position irradiated with the laser. For example, a size of the heat affected zone 450 may be determined based on an intensity of the laser. For example, in a case that the cover plate 400 is irradiated with a first laser L1 having the weakest intensity, a second laser L2 having an intermediate intensity, and/or a third laser L3 having the strongest intensity, the second layer 420 may form a first heat affected zone 451, a second heat affected zone 452, and/or a third heat affected zone 453 by absorbing the first laser L1, the second laser L2, and/or the third laser L3. For example, the first heat affected zone 451 may be formed in a region corresponding to a position to which the first laser L1 is irradiated. For example, the second heat affected zone 452 may be formed in a region corresponding to a position to which the second laser L2 is irradiated. For example, the third heat affected zone 453 may be formed in a region corresponding to a position to which the third laser L3 is irradiated. A size of the first heat affected zone 451 may be smaller than that of the second heat affected zone 452, and a size of the second heat affected zone 452 may be smaller than that of the third heat affected zone 453. According to the intensity of the irradiated laser, the heat affected zone 450 may be formed only in a coating layer 402 or may be formed in the coating layer 402 and the base plate 401. For example, the first heat affected zone 451 and the second heat affected zone 452 may be formed in the first layer 410, the second layer 420, and the third layer 430, and the third heat affected zone 453 may be formed in the first layer 410, the second layer 420, the third layer 430, and the base plate 401.

For example, the second layer 420 may include silicon. Table 2 below indicates an absorption coefficient of the silicon and other materials.

**[Table 2]**

| Material | Absorption coefficient |
|---|---|
| SiO₂ | 0.00000 |
| SiN | 0.00000 |
| Al₂O₃ | 0.00000 |
| Si | 1.97799 |

Referring to the Table 2, since an absorption coefficient for a laser is substantially 0 in a case of a silicon oxide film, a silicon nitride film, and an aluminum oxide film, it may be difficult to absorb energy of the laser. Since the absorption coefficient for the laser is relatively high in a case of silicon, a laser (e.g., a nanosecond laser) with relatively low energy may be easily absorbed. For example, the second layer 420 may have a high absorption rate for the laser with the specified wavelength range by including the silicon. As the second layer 420 including the silicon forms the heat affected zone 450 by absorbing the energy of the laser, the plurality of patterns 440 may be formed by the laser. For example, the second layer 420 may enable formation of the plurality of patterns 440 by the nanosecond laser having lower energy than that of a picosecond laser and/or a femtosecond laser.

Silicon, which is an element in Group 14 of the periodic table, has four outermost electrons. As the four outermost electrons of silicon form a covalent bond with four other atoms, silicon may have non-conductivity with low electrical conductivity. For example, in a case that the cover plate 400 forms at least a part (e.g., a rear surface) of an exterior of an electronic device 101, a non-conductive property of the cover plate 400 may be required to reduce an electromagnetic effect between electronic components inside the electronic device 101 and the cover plate 400. Since silicon not only has a high absorption coefficient for a laser but also has the non-conductive property, it may be used as a material for the cover plate 400 forming a housing of the electronic device 101.

For example, an absorption rate of the second layer 420 for the laser with the specified wavelength range may be higher than an absorption rate of the base plate 401 including glass for the laser. For example, the second layer 420 may have a relatively higher absorption rate than that of the base plate 401 for a nanosecond laser with the wavelength of approximately 300 nm to approximately 1,100 nm. For example, the second layer 420 may have a relatively higher absorption rate than that of the base plate 401 for the infrared radiation (IR) with the wavelength of approximately 1000 nm to approximately 1,100 nm, the green visible light with the wavelength of approximately 500 nm to approximately 590 nm, and/or the ultra violet (UV) with the wavelength of approximately 300 nm to 370 nm. The above-described wavelength range is merely an example, and is not limited thereto.

For example, the first layer 410 may be disposed below the second layer 420 (e.g., in the +z direction). For example, the first layer 410 may be disposed above the base plate 401 (e.g., in a -z direction). For example, the first layer 410 may attach the second layer 420 to a surface of the base plate 401. For example, the first layer 410 may have an adhesion force for attaching the second layer 420 to the surface of the base plate 401.

For example, the first layer 410 may include a plurality of refractive layers having different refractive indexes. For example, the third layer 430 may include a first refractive layer 411 having a first refractive index and a second refractive layer 412 having a second refractive index. The first refractive index may be different from the second refractive index. For example, the first refractive index may be a relatively low refractive index, and the second refractive index may be a relatively high refractive index. However, it is not limited thereto. For example, the first layer 410 may also include two or more refractive layers, and some of the plurality of refractive layers may also have the same refractive index. The first refractive layer 411 and the second refractive layer 412 are merely described exemplarily for convenience of description, but are not limited thereto. For example, the first layer 410 may include a plurality of three or more refractive layers.

For example, light incident from the outside of the cover plate 400 may be refracted through at least one refractive layer 411 and/or 412 in the first layer 410. For example, the light may be reflected or refracted by a difference between the first refractive index and the second refractive index at an interface between the first refractive layer 411 and the second refractive layer 412. CMF of the cover plate 400 visible from the outside may be adjusted by the number, a thickness, and/or a refractive index of the at least one refractive layer 411 and/or 412 included in the first layer 410. For example, as the number, the thickness, and/or the refractive index of the at least one refractive layer 411 and/or 412 are intentionally adjusted such that light with a specific wavelength range is emitted to the outside, the exterior of electronic device 101 may be adjusted.

For example, the first layer 410 and the third layer 430 may include a silicon oxide film (SiOₓ) and/or a silicon nitride film (SiNₓ). Since silicon may form a stable film by easily reacting with another element such as oxygen and nitrogen, it may provide stability of the coating layer 402. By including the silicon oxide film and/or the silicon nitride film, the first layer 410 and the third layer 430 may protect the base plate 401, and the second layer 420 that is interposed between the first layer 410 and the third layer 430.

For example, the coating layer 402 may be formed through a physical vapor deposition (PVD) sputter process. For example, in a case that the base plate 401 includes glass, the glass may be damaged during a high-temperature process. The coating layer 402 coated on the base plate 401 may be formed through the PVD sputter process deposited at a relatively low temperature. Since the first layer 410, the second layer 420, and the third layer 430 basically include silicon, a process time may be reduced by performing the PVD process using only silicon.

According to an embodiment, the plurality of patterns 440 of the cover plate 400 may be formed by a laser with relatively low energy through the coating layers 402 coated on the base plate 401. For example, when a nanosecond laser is irradiated to the surface of the cover plate 400, the nanosecond laser may be transmitted through the third layer 430 having a relatively low reflexibility and reach the second layer 420. Since the second layer 420 has a high absorption rate for the nanosecond laser, it may form the heat affected zone 450 by absorbing energy of the nanosecond laser. As a partial region in the heat affected zone 450 is removed by the nanosecond laser, the plurality of patterns 440 may be formed. For example, since a facility equipped with a nanosecond laser device is less expensive than a facility equipped with a picosecond laser device and/or a femtosecond laser device, a manufacturing cost of the cover plate 400 including the plurality of patterns 440 may become less expensive.

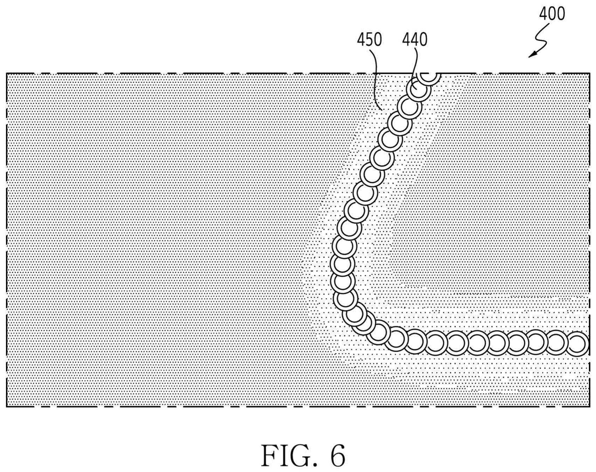

FIG. 6 is an enlarged view of enlarging a heat affected zone and a pattern of an exemplary cover plate.

Referring to FIG. 6, a plurality of patterns 440 may be formed in a heat affected zone 450. For example, the plurality of patterns 440 and the heat affected zone 450 may be observed through an electron microscope. When a laser (e.g., a nanosecond laser) with relatively low energy is irradiated to a surface of a cover plate 400, the heat affected zone 450 may be formed as a second layer (e.g., the second layer 420 of FIG. 4) absorbs the energy of the laser. The heat affected zone 450, which is a portion in which a crystal structure is deformed by the energy (e.g., thermal energy) of the laser absorbed in the second layer 420, may be referred to as an unmelted portion. The plurality of patterns 440 may be formed in a melted portion (e.g., the melted portion 510 of FIG. 5B) melted by the energy of the laser, and the heat affected zone 450 may be formed in a certain region around the melted portion 510. When the melted portion 510 is solidified, the plurality of patterns 440 may be formed in the heat affected zone 450.

For example, the heat affected zone 450 may be formed in a process of processing the plurality of patterns 440 by the laser. For example, the laser may be a nanosecond laser having lower energy than that of a picosecond laser and/or a femtosecond laser. For example, a wavelength of the laser may be from approximately 300 nm to approximately 1,100 nm. However, it is not limited thereto. Since a pulse width of the laser is relatively long in a case of the nanosecond laser with relatively low energy, thermal energy is diffused around a portion irradiated with the nanosecond, so the heat affected zone 450 may be formed. Since a pulse width of the laser is short in a case of the picosecond laser and/or the femtosecond laser with relatively high energy, the heat affected zone 450 may not be formed, or the heat affected zone 450 having a smaller size than that in the case of the nanosecond laser may be formed.

For example, in a case that a nanosecond laser is irradiated to a surface of a base plate (e.g., the base plate 401 of FIG. 4) including tempered glass, it may be difficult to form the plurality of patterns 440 on the base plate 401 due to a high reflexibility and a low absorption rate for the nanosecond laser. The cover plate 400 according to an embodiment may include a coating layer (e.g., the coating layer 402 of FIG. 4) that enables processing of the plurality of patterns 440 by the nanosecond laser. For example, in order to enable processing of the plurality of patterns 440 by the nanosecond laser, the coating layer 402 may include a third layer (e.g., the third layer 430 of FIG. 4) having a relatively low reflexibility (e.g., equal to or less than approximately 50%) and the second layer 420 forming the heat affected zone 450 by absorbing the energy of the nanosecond laser. Since the heat affected zone 450 is formed in the process of forming the plurality of patterns 440 by the nanosecond laser, the plurality of patterns 440 may be positioned in the heat affected zone 450. Since the cover plate 400 according to an embodiment may form the plurality of patterns 440 using a facility equipped with a nanosecond laser device, a manufacturing cost may be less expensive and commercialization of a manufacturing facility may be easy.

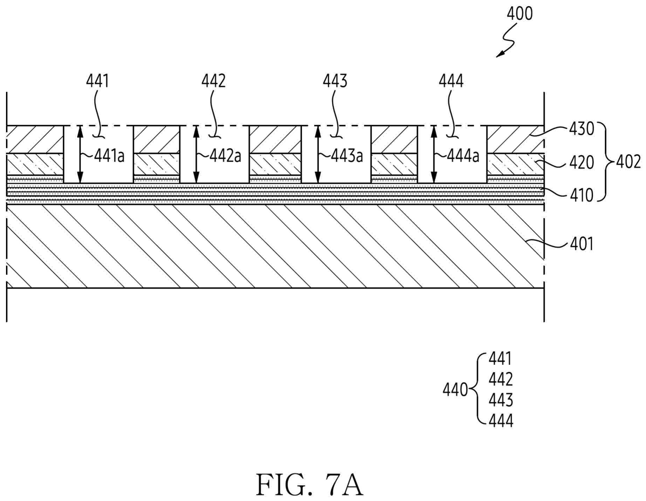

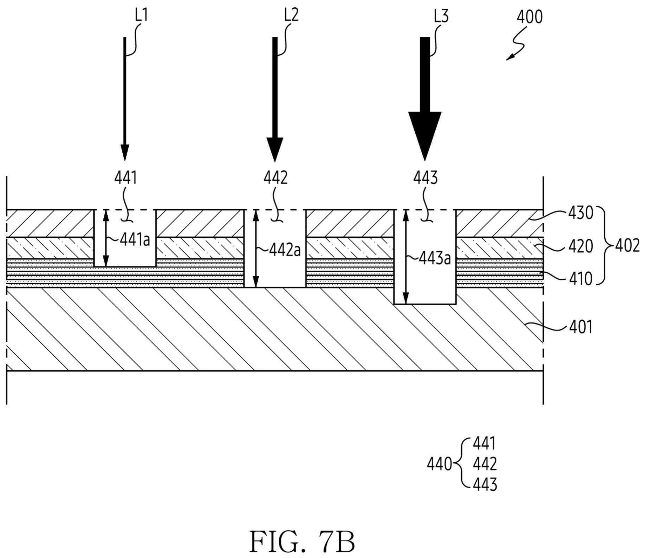

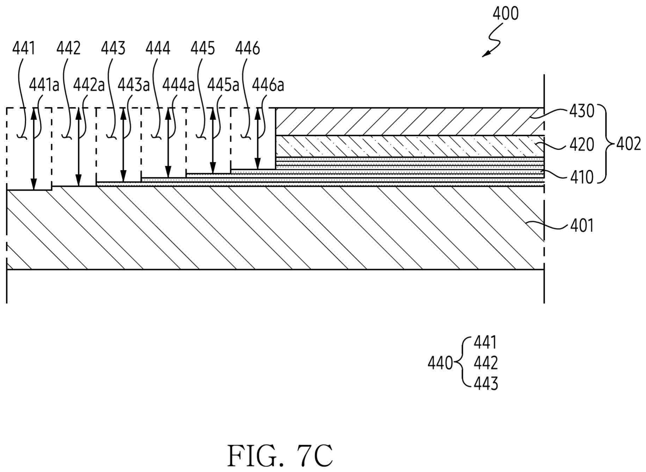

FIGS. 7A, 7B, and 7C are cross-sectional views of a portion of an exemplary cover plate including a pattern.

A plurality of patterns 440 illustrated in FIGS. 7A, 7B, and 7C are merely an example of the plurality of patterns 440 formed by a nanosecond laser, and the plurality of patterns 440 are not limited to the illustrated examples. The number, a shape, and/or a depth of the plurality of patterns 440 may be variously formed according to a condition of a laser irradiated to a surface of a cover plate 400.

For example, the cover plate 400 may include various patterns according to different laser conditions. For example, the depth of the plurality of patterns 440 may be determined based on an intensity of the laser. As the intensity of the laser is stronger, a size of a heat affected zone (e.g., the heat affected zone 450 of FIG. 6) and the depth of the plurality of patterns 440 may increase. When forming the plurality of patterns 440 on the cover plate 400, various patterns may be formed as the intensity of the laser is adjusted. For example, the plurality of patterns 440 may be formed at least partially on a base plate 401 and/or a coating layer 402. For example, the plurality of patterns 440 may be formed on at least one of the base plate 401, a first layer 410, a second layer 420, and/or a third layer 430.

Referring to FIG. 7A, the plurality of patterns 440 of the cover plate 400 may be spaced apart from each other and may be substantially the same. For example, the plurality of patterns 440 may include a first pattern 441, a second pattern 442, a third pattern 443, and/or a fourth pattern 444. The first pattern 441, the second pattern 442, the third pattern 443, and/or the fourth pattern 444 are merely described exemplarily for convenience of description of an example of the plurality of patterns 440, but are not limited thereto.

For example, the first pattern 441, the second pattern 442, the third pattern 443, and/or the fourth pattern 444 may be spaced apart from each other. For example, when a laser is irradiated to form the plurality of patterns 440, the plurality of patterns 440 spaced apart from each other may be formed as positions to which the laser is irradiated are spaced apart from each other.

For example, a first depth 441a of the first pattern 441, a second depth 442a of the second pattern 442, a third depth 443a of the third pattern 443, and/or a fourth depth 444a of the fourth pattern 444 may be substantially the same. For example, when a laser is irradiated to form the first pattern 441, the second pattern 442, the third pattern 443, and/or the fourth pattern 444, the plurality of patterns 440 having substantially the same depth and size may be formed by maintaining an intensity of the laser substantially constant. For example, the plurality of patterns 440 may be formed in the third layer 430, the second layer 420, and a portion of the first layer 410. A surface design of the cover plate 400 may be formed by the plurality of patterns 440 having substantially the same depth.

Referring to FIG. 7B, a plurality of patterns 440 of the cover plate 400 may be spaced apart from each other and may have different depths. For example, the plurality of patterns 440 may include a first pattern 441, a second pattern 442, and/or a third pattern 443. For example, the first pattern 441, the second pattern 442, and/or the third pattern 443 may be spaced apart from each other. The first pattern 441, the second pattern 442, and/or the third pattern 443 are merely described exemplarily for convenience of description of an example of the plurality of patterns 440, but are not limited thereto.

For example, the first pattern 441, the second pattern 442, and/or the third pattern 443 may be spaced apart from each other. For example, when a laser is irradiated to form the plurality of patterns 440, the plurality of patterns 440 spaced apart from each other may be formed as positions to which the laser is irradiated are spaced apart from each other.

For example, a first depth 441a of the first pattern 441, a second depth 442a of the second pattern 442, and/or a third depth 443a of the third pattern 443 may be independent. For example, the first depth 441a, the second depth 442a, and/or the third depth 443a may be different from each other. As illustrated in FIG. 7B, the second depth 442a may be deeper than the first depth 441a and shallower than the third depth 443a. However, it is not limited thereto. For example, when a laser is irradiated to form the first pattern 441, the second pattern 442, and/or the third pattern 443, the plurality of patterns 440 having different depths may be formed as intensities of the laser are set differently.

For example, as a first laser L1 having the weakest intensity is irradiated to a position where the first pattern 441 is to be formed, the first pattern 441 having the first depth 441a may be formed. For example, as a second laser L2 having an intermediate intensity is irradiated at a position where the second pattern 442 is to be formed, the second pattern 442 having the second depth 442a deeper than the first depth 441a may be formed. For example, as a third laser L3 having the strongest intensity is irradiated at a position where the third pattern 443 is to be formed, the third pattern 443 having the third depth 443a deeper than the second depth 442a may be formed. For example, the first pattern 441 may be formed in the third layer 430, the second layer 420, and a portion of the first layer 410. For example, the second pattern 442 may be formed in the third layer 430, the second layer 420, and the first layer 410. For example, the third pattern 443 may be formed in the third layer 430, the second layer 420, the first layer 410, and a portion of the base plate 401.

For example, in order to variously form an image of the cover plate 400 formed through the plurality of patterns 440, the intensity of the laser for forming the plurality of patterns 440 may be adjusted. A surface design of the cover plate 400 may be formed by the plurality of patterns 440 having various depths. Since various reflections of visible light may be implemented due to a difference in the depths of the plurality of patterns 440, CMF of the cover plate 400 may be implemented in various ways.

Referring to FIG. 7C, a plurality of patterns 440 of the cover plate 400 may include the plurality of patterns 440 which are in contact with each other and have different depths. For example, the plurality of patterns 440 may be continuous by being in contact with each other. For example, the depth of the plurality of patterns 440 may form a gradation by being gradually increased or decreased.

For example, the plurality of patterns 440 may include a first pattern 441, a second pattern 442, and a third pattern 443. For example, the second pattern 442 may be in contact with the first pattern 441. For example, the third pattern 443 may be in contact with the second pattern 442. For example, the second pattern 442 may be disposed between the first pattern 441 and the third pattern 443.

For example, a first depth 441a of the first pattern 441, a second depth 442a of the second pattern 442, and/or a third depth 443a of the third pattern 443 may form a gradation by being gradually decreased. For example, the second depth 442a may be shallower than the first depth 441a, and the third depth 443a may be shallower than the second depth 442a. The gradation may be formed in the first pattern 441, the second pattern 442, and the third pattern 443 by having a depth that is gradually decreased according to an order in which the first pattern 441, the second pattern 442, and the third pattern 443 are disposed. For example, when a laser is irradiated, the plurality of patterns 440 forming the gradation may be formed as the intensity of the laser is gradually decreased.

The first pattern 441, the second pattern 442, and the third pattern 443 described above are merely an example of the plurality of patterns 440 forming the gradation, but are not limited thereto. For example, the plurality of patterns 440 forming the gradation may also include the plurality of three or more patterns 440, and the plurality of three or more patterns 440 may have a depth that is gradually increased or decreased. For example, as illustrated in FIG. 7C, the plurality of patterns 440 may include six patterns. For example, the plurality of patterns 440 may include the first pattern 441, the second pattern 442, the third pattern 443, the fourth pattern 444, a fifth pattern 445, and/or a sixth pattern 447. The depth of the plurality of patterns 440 may have a depth that is gradually increased or decreased.

For example, the first depth 441a may be the deepest, and the sixth depth 446a may be the shallowest. The first depth 441a, the second depth 442a, the third depth 443a, the fourth depth 444a, a fifth depth 445a, and/or a sixth depth 446a may be gradually decreased. However, it is not limited thereto. The plurality of patterns 440 may have various shapes.

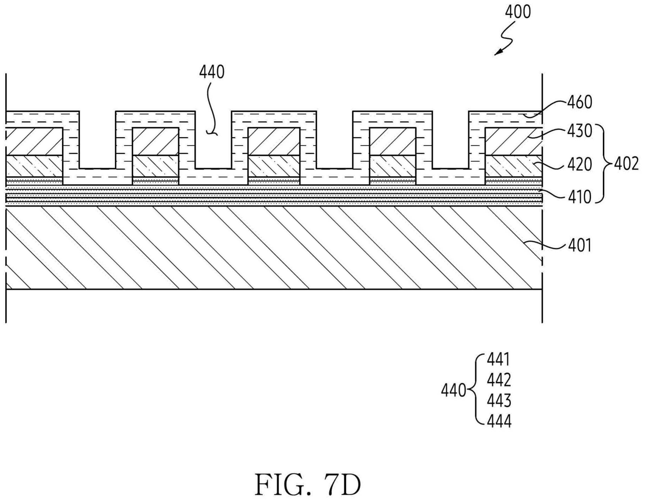

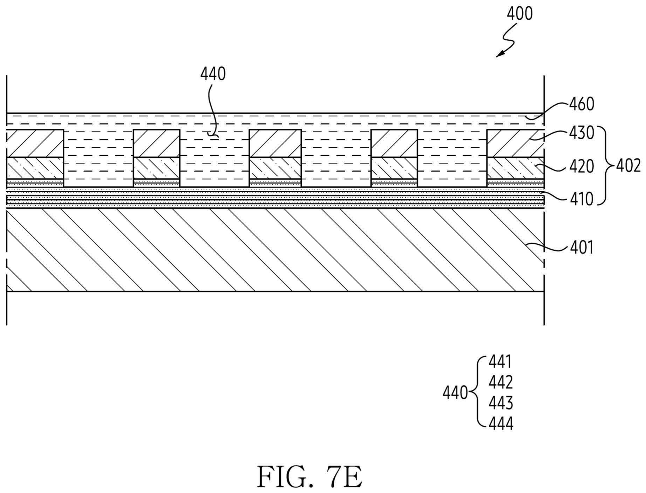

FIGS. 7D and 7E are cross-sectional views of a portion of an exemplary cover plate including a protective layer.

The above-described cover plate 400 has been described as having a structure in which the third layer 430 is disposed at an outermost periphery, but is not limited thereto. For example, the cover plate 400 may further include a protective layer 460 for protecting the base plate 401, the first layer 410, the second layer 420, and the third layer 430.

Referring to FIGS. 7D and 7E, the protective layer 460 may form an outer surface of the cover plate 400 by being disposed at an outermost periphery of the cover plate 400. For example, the protective layer 460 may reduce contamination of the cover plate 400 by foreign substances. For example, the protective layer 460 may reduce a fingerprint from being left on it when in contact with a finger of a user by being disposed at the outermost periphery of the cover plate 400. For example, the protective layer 460 may include a fluorine compound and/or a hydrocarbon compound to reduce contamination by foreign substances.

For example, the protective layer 460 may be formed along an outer periphery of the plurality of patterns 440 or may cover the plurality of patterns 440. For example, as illustrated in FIG. 7D, the protective layer 460 may be coated along the outer periphery of the plurality of patterns 440. For another example, as illustrated in FIG. 7E, the protective layer 460 may be coated to cover the plurality of patterns 440. A portion of the protective layer 460 may include SiO₂ inherent between the outer periphery of the plurality of patterns 440 and the protective layer 460 based on a property for reducing contamination by foreign substances. However, it is not limited thereto.

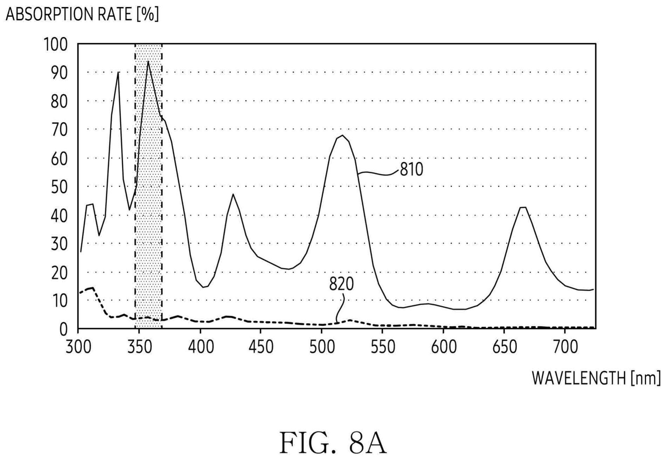

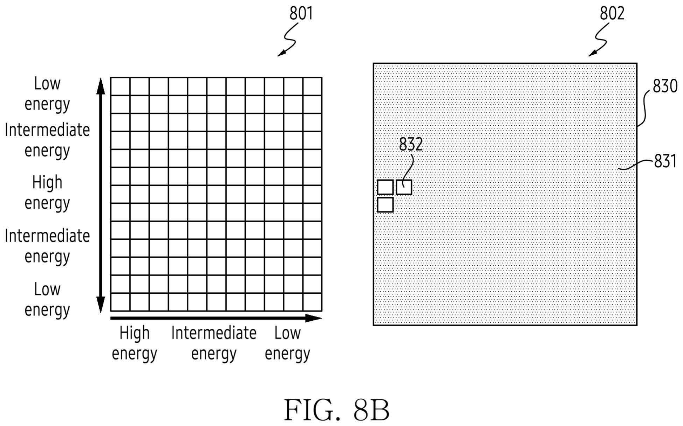

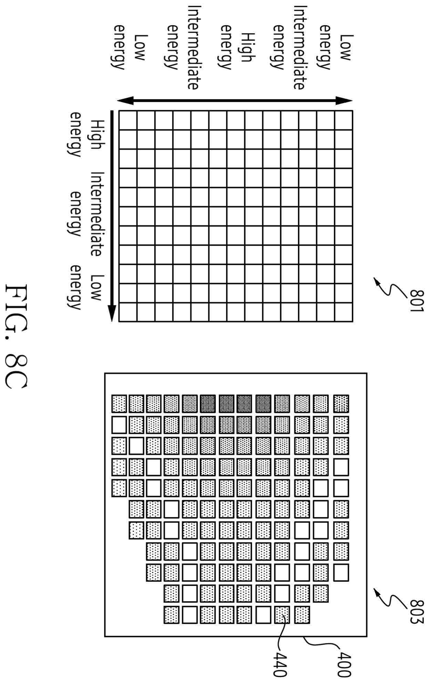

FIG. 8A is a graph indicating an absorption rate of a cover plate according to a wavelength of a laser. FIG. 8B illustrates a pattern formed on a cover plate according to a comparative example according to an energy intensity of a laser. FIG. 8C illustrates a pattern formed on a cover plate according to an embodiment according to an energy intensity of a laser.

A first graph 810 in FIG. 8A is a graph indicating an absorption rate of a cover plate (e.g., the cover plate 400 of FIG. 4) according to an embodiment for a laser. A second graph 820 is a graph indicating an absorption rate of a cover plate (e.g., a cover plate 830 of FIG. 8B) according to a comparative example for a laser.

The cover plate 400 according to an embodiment may be referred to as the cover plate 400 including the above-described coating layer (e.g., the coating layer 402 of FIG. 4). For example, the cover plate 400 according to an embodiment may include a second layer (e.g., the second layer 420 of FIG. 4) including silicon having a high absorption coefficient to absorb energy of a laser. The cover plate 400 according to an embodiment may enable laser ablation by a laser with relatively low energy. A pattern may be formed by the laser with relatively low energy by a third layer (e.g., the third layer 430 of FIG. 4) having a low reflexibility and a second layer 420 that forms a heat affected zone (e.g., the heat affected zone 450 of FIG. 6) by absorbing energy of the laser.

The cover plate 830 according to the comparative example may be referred to as a cover plate that does not include the above-described coating layer 402. For example, the cover plate 830 according to the comparative example may not include the second layer 420. For example, in a case of the cover plate 830 that does not include the above-described coating layer 402, when the laser with relatively low energy is irradiated to a surface of a base plate (e.g., a base plate 831 of FIG. 8B) including tempered glass, it may be difficult to form a pattern due to a low absorption rate and a high reflexibility of the base plate 831.

Referring to FIG. 8A, the first graph 810 may have a higher absorption rate than that of the second graph 820. For example, when comparing absorption rates for a laser with a wavelength of approximately 355 nm, the first graph 810 may indicate approximately 94%, and the second graph 820 may indicate approximately 3%. For example, when the laser with the wavelength of approximately 355 nm is irradiated, since the cover plate 400 according to an example has a high absorption rate, it may be easy to form a pattern. For example, when the laser with the wavelength of approximately 355 nm is irradiated, since the cover plate 830 according to the comparative example has a low absorption rate, it may be difficult to form a pattern.

Referring to FIGS. 8B and 8C, in a case that a surface of the cover plate 400 or 830 is divided and distinguished into a plurality of regions and energy of different intensities is irradiated to each region, the pattern formed on the cover plate 830 according to the comparative example and the pattern formed on the cover plate 400 according to an embodiment may be different from each other.

For example, 801 illustrated in FIGS. 8B and 8C indicates a state in which the surface of the cover plate 400 is divided into a plurality of regions by dividing the surface of the cover plate 400 or 830 into a virtual two-dimensional coordinate system including an x-axis and a y-axis. Energy of a laser irradiated to the plurality of regions is represented in the x-axis and the y-axis. For example, an intensity of the laser may be gradually decreased along the x-axis. For example, the intensity of the laser is highest in a center of the y-axis, and may be gradually decreased as it moves away from the center of the y-axis.

In a case that energy of different intensities is irradiated to each of a plurality of regions of the cover plate 830 according to the comparative example, a result of 802 in FIG. 8B may be obtained. For example, since the cover plate 830 according to the comparative example does not include the above-described coating layer 402, a laser may be irradiated to a surface of the base plate 831. Since the base plate 831 including tempered glass has a high reflexibility and a low absorption rate for a laser, a plurality of patterns 832 may be formed only in a region irradiated with a laser under a limited condition. For example, in a case of the cover plate 830 according to the comparative example, the plurality of patterns 832 may be limitedly formed only in a partial region where high energy is irradiated.

In a case that energy of different intensities is irradiated to each of the plurality of regions of the cover plate 400 according to an embodiment, a result of 803 in FIG. 8C may be obtained. For example, since the cover plate 400 according to an embodiment includes the above-described coating layer 402, a laser may be irradiated to a third layer 430. As the laser transmitted through the third layer 430 is absorbed in the second layer 420, a heat affected zone 450 may be formed. Even though a laser with relatively low energy is irradiated, the second layer 420 may form the heat affected zone 450 by absorbing the energy of the laser, and a plurality of patterns 440 may be formed by the heat affected zone 450. Referring to FIG. 8C, the plurality of patterns 440 may be formed in most regions of the cover plate 400. According to an embodiment, since the plurality of patterns 440 may be formed by a laser (e.g., a nanosecond laser) with relatively low energy, a process of processing the cover plate 400 may be easy.

A cover plate 400 is provided. The cover plate 400 may include a base plate 401. The cover plate 400 may include a first layer 410. The first layer 410 may be disposed on the base plate 401. The first layer 410 may include at least one refractive layer 431 and/or 432 for refracting light. The cover plate 400 may include a second layer 420 disposed on the first layer 410. The second layer 420 may include silicon (Si). The cover plate 400 may include a third layer 430 disposed on the second layer 420. The third layer 430 may have a reflexibility equal to or less than a threshold value for a laser with a specified wavelength range. The third layer 430 may be configured to transmit the laser. The cover plate 400 may include a plurality of patterns 440 formed on at least one of the base plate 401, the first layer 410, the second layer 420, or the third layer 430. The plurality of patterns 440 may be formed by the laser. An absorption rate of the second layer 420 for the laser may be higher than an absorption rate of the base plate 401 for the laser. According to the present disclosure, processing of the plurality of patterns 440 by a laser (e.g., a nanosecond layer) with relatively low energy may be possible. As the third layer 430, which is an outermost layer, has a relatively low reflexibility for the laser, it may enable penetration of the laser to form the plurality of patterns 440. For example, the second layer 420 may include silicon having a high absorption coefficient in order to absorb energy of the laser. The second layer 420 may form a heat affected zone 450 by absorbing energy of the laser transmitted through the third layer 430. The plurality of patterns 440 may be formed in the heat affected zone 450. For example, since processing of the plurality of patterns 440 using relatively low energy is possible, a manufacturing cost of the cover plate 400 may be reduced and a manufacturing process may be simplified.

For example, the specified wavelength range may be from 300 nm to 1,100 nm. For example, the wavelength range may correspond to a wavelength range of a nanosecond laser.

For example, the threshold value may be 50%. For example, the third layer 430 may have a reflexibility of equal to or less than approximately 50% for infrared radiation (IR) with a wavelength of approximately 1000 nm to approximately 1,100 nm, green visible light with a wavelength of approximately 500 nm to approximately 590 nm, and/or ultra violet (UV) with a wavelength of approximately 300 nm to 370 nm.

For example, the second layer 420 may form a heat affected zone 450 formed on at least one of the first layer 410, the second layer 420, the third layer 430, or the base plate 401, based on the laser transmitted through the third layer 430.

For example, the plurality of patterns 440 may be formed in the heat affected zone 450.

For example, the first layer 410 and the third layer 430 may include silicon. According to the present disclosure, as the coating layer 402 is manufactured from a silicon-based material, it may provide a low reflexibility and a high absorption rate for the laser.

For example, the base plate 401 may include at least one of glass or polymer.

For example, the plurality of patterns 440 may have a depth based on an intensity of the laser.

For example, the plurality of patterns 440 may include a first pattern 441 and a second pattern 442. The first pattern 441 may have a first depth 441a. The second pattern 442 may be spaced apart from the first pattern 441. The second pattern 442 may have a second depth 442a.

For example, the first depth 441a may be different from the second depth 442a.

For example, the plurality of patterns 440 may include a first pattern 441, a second pattern 442 in contact with the first pattern 441, and a third pattern 443 in contact with the second pattern 442. The first pattern 441 may have a first depth 441a. The second pattern 442 may have a second depth 442a shallower than the first depth 441a. The third pattern 443 may have a third depth 443a shallower than the second depth 442a.

For example, the first layer 410 may attach the second layer 420 to the base plate 401.

For example, the third layer 430 may include a first refractive layer 431 having a first refractive index, and a second refractive layer 432 having a second refractive index different from the first refractive index.

For example, the first layer 410 and the third layer 430 may include at least one of a silicon oxide film and a silicon nitride film.

For example, the laser may be a nanosecond laser.

An electronic device 101 is provided. The electronic device 101 may include a cover plate 400 forming at least a part of an exterior of the electronic device 101. The cover plate 400 may include a base plate 401. The cover plate 400 may include a first layer 410 disposed on the base plate 401. The first layer 410 may include at least one refractive layer 431 and/or 432 for refracting light. The cover plate 400 may include a second layer 420 disposed on the first layer 410. The second layer 420 may include silicon (Si). The cover plate 400 may include a third layer 430 disposed on the second layer 420. The third layer 430 may have a reflexibility equal to or less than a threshold value for a laser with a specified wavelength range. The third layer 430 may be configured to transmit the laser. The cover plate 400 may include a plurality of patterns 440 formed on at least one of the base plate 401, the first layer 410, the second layer 420, or the third layer 430. An absorption rate of the second layer 420 for the laser may be higher than an absorption rate of the base plate 401 for the laser.

For example, the electronic device 101 may further include a display 201 forming at least a part of a front surface of the electronic device 101. The cover plate 400 may form at least a part of a rear surface of the electronic device 101.

For example, the base plate 401, the first layer 410, the second layer 420, and the third layer 430 may be sequentially laminated along a direction of the rear surface.

For example, the specified wavelength range may be from 300 nm to 1,100 nm.

For example, the threshold value may be 50%.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A cover plate comprising:
a base plate;
a first layer disposed on the base plate and comprising at least one refractive layer for refracting light;
a second layer disposed on the first layer and comprising silicon;
a third layer, disposed on the second layer, having a reflexibility equal to or less than a threshold value for a laser with a specified wavelength range, and configured to transmit the laser; and
a plurality of patterns formed on at least one of the base plate, the first layer, the second layer, or the third layer,
wherein an absorption rate of the second layer for the laser is higher than an absorption rate of the base plate for the laser.

2. The cover plate of claim 1,
wherein the specified wavelength range is from 300 nm to 1,100 nm.

3. The cover plate of claim 1 or 2,
wherein the threshold value is 50%.

4. The cover plate of any one of claims 1 to 3,
wherein the second layer forms a heat affected zone formed on at least one of the first layer, the second layer, the third layer, or the base plate, based on the laser transmitted through the third layer.

5. The cover plate of claim 4,
wherein the plurality of patterns are formed in the heat affected zone.

6. The cover plate of any one of claims 1 to 5,
wherein the first layer and the third layer comprise silicon.

7. The cover plate of any one of claims 1 to 6,
wherein the base plate comprises at least one of glass or polymer.

8. The cover plate of any one of claims 1 to 7,
wherein the plurality of patterns have a depth based on an intensity of the laser.

9. The cover plate of any one of claims 1 to 8,
wherein the plurality of patterns include a first pattern and a second pattern,
wherein the first pattern has a first depth, and
wherein the second pattern is spaced apart from the first pattern and has a second depth.

10. The cover plate of claim 9,
wherein the first depth is different from the second depth.

11. The cover plate of any one of claims 1 to 10,
wherein the plurality of patterns include:
a first pattern,
a second pattern in contact with the first pattern, and
a third pattern in contact with the second pattern,
wherein the first pattern has a first depth,
wherein the second pattern has a second depth shallower than the first depth (441a), and
wherein the third pattern has a third depth shallower than the second depth (442a).

12. The cover plate of any one of claims 1 to 11,
wherein the first layer attaches the second layer to the base plate.

13. The cover plate of any one of claims 1 to 12,
wherein the third layer includes:
a first refractive layer having a first refractive index, and
a second refractive layer having a second refractive index different from the first refractive index.

14. The cover plate of any one of claims 1 to 13,
wherein the first layer and the third layer comprise at least one of a silicon oxide film and a silicon nitride film.

15. The cover plate of any one of claims 1 to 14,
wherein the laser is a nanosecond laser.
